# EUROPÄISCHE PATENTSCHRIFT

(11) **EP 0 850 717 B1**
(45) Veröffentlichungstag und Bekanntmachung des Hinweises auf die Patenterteilung: **07.03.2001**
(21) Anmeldenummer: 97122655.0
(22) Anmeldetag: 22.12.1997
(51) Int. Cl.: B23K 9/28

(54) **Roboterschweissbrenner**
Robotic welding torch
Torche de soudage pour robot

(30) Priorität: 24.12.1996 DE 19654316
(43) Veröffentlichungstag der Anmeldung: 01.07.1998
(73) Patentinhaber: TBi Industries GmbH & Co. KG, 35463 Fernwald/Steinbach (DE)
(72) Erfinder: Bürkner, Gunnar Dr., 01324 Dresden (DE); Herber, Wolfgang, 35305 Grünberg-Weickartshaim (DE)
(74) Vertreter: Zieger, Sieglinde, Dipl.-Chem. Petra & Zieger Patentanwälte

(56) Entgegenhaltungen:
- EP-A- 0 590 728
- DE-U- 9 311 142

## Beschreibung

Die Erfindung betrifft einen wassergekühlten MIG-Roboterschweißbrenner gemäß dem Oberbegriff des Anspruchs 1 (siehe EP-A-590728). Roboterschweißbrenner werden dort eingesetzt, wo in großer Stückzahl gleiche oder vergleichbare Schweißnähte unter gleichen Schweißbedingungen gezogen werden, insbesondere im Fahrzeugbau. Roboterschweißbrenner müssen garantieren, daß jede Naht an der gleichen Stelle bei gleichbleibender Ausführungsqualität verläuft und arbeiten nach dem MIG-Schweißverfahren und dabei bevorzugt wassergekühlt. Nach dem bekannten Stand der Technik gibt es verschiedene konstruktive Lösungen, die versuchen, diese Maßgenauigkeit zu gewährleisten. In DE-G 88 10 131.2 ist eine Lösung unter Verwendung einer Sensoranordnung am Schweißbrenner offenbart, wobei ein Aufnahmekopf die Sensoranordnung trägt und um die Achse des Schweißbrenners drehbar gelagert und angetrieben ist. Damit kann die Veränderung der Lage des Schweißbrenners in seiner Gesamtheit kontrolliert und korrigiert werden, ohne der Torsion des Schlauchpaketes ausgesetzt zu sein. Damit kann aber die Schweißdrahtablenkung im Brennerrohr nicht behoben werden, die zu Unterbrechungen in der Stromführung am Schweißdraht führt und einen ungleichmäßigen Nahtverlauf zur Folge hat. Das ist in der Fahrzeugindustrie ein ständiges und großes Qualitätsproblem, insbesondere bei geraden Schweißbrennern. DE-G 92 06 751.4 versucht das Problem zu lösen, indem im Düsenstock ein stromleitendes Element aus Draht befestigt wird, welches die Stromübergangsfläche spürbar vergrößert. In DE-OS 38 07 104 wird die Führung der Drahtelektrode dadurch verbessert, daß die Stromdüse in einem begrenzten Bereich längs der Führungsbahn der Drahtelektrode einen Bereich hoher elektrischer Leitfähigkeit und einen Bereich hoher Verschleißfestigkeit aufweist. Der Bereich der hohen Verschleißfestigkeit dient insbesondere der präzisen Drahtführung und ist vorzugsweise aus einem wolfram- und kupferhaltigen Sinterwerkstoff oder einem wolfram- und silberhaltigen Sinterwerkstoff.
Vor diesem technischen Hintergrund stellt sich die Erfindung die Aufgabe, einen wassergekühlten MIG-Roboterschweißbrenner zu entwickeln, der ohne zusätzliche Sensoranordnung und teure Materialkombinationen über eine beliebig lange Einsatzzeit einen reproduzierbaren, präzisen Nahtverlauf gewährleistet.
Erfindungsgemäß wird die Aufgabe durch die Merkmale des Anspruchs 1 gelöst. Das Brennerrohr wird durch ein zusätzliches Innen- und Außenrohr aus nichtferromagnetischem, steifen Matrial, bevorzugt VA-Stahl, stabilisiert und gleichzeitig wird die Paßgenauigkeit zum Einspannbereich des Roboterschweißbrenners erhöht.

Anwendungsbedingt kann das Außenrohr mit isolierendem Material beschichtet sein, um es gegen Mikroschweißspritzer zu schützen und dadurch haltbarer auszurüsten. Das Außenrohr ist geometrisch aufgebaut und zwar derart, daß der stärkere Durchmesser im Verhältnis zum dünneren Durchmesser wie 2/3 : 1/3 ist. Das Brennerrohr weist im vorderen Bereich versetzt angeordnete Einengungen nach innen auf, bevorzugt 2-6, die die Drahtspirale zwangsweise ausbuchten, außermittig anordnen und der Schweißdraht dadurch aus der außermittigen Führungsposition im Übergang in der Stromdüse in eine mittige Position gezwängt wird. Das normalerweise "unruhige" Austreten des Schweißdrahtes aus der Stromdüse wird dadurch beruhigt und es gibt keine Abweichungen des Roboterschweißbrenners vom vorgegebenen Verlauf der Schweißnaht. Die zwangweise Störung des Schweißdrahtes im Kopfbereich des Brenners in Verbindung mit der stabilisierten Führung des Roboterschweißbrenners durch die Anordnung des zusätzlichen Innen- und Außenrohres hat eine unerwartet vorteilhafte Wirkung auf die Nahtqualität. Außerdem führt die außermittige Anordnung der Drahtspirale im Brennerrohr zu einer definierten Kontaktierung des Schweißdrahtes mit der Stromdüse, was den Verlauf der Schweißnaht zusätzlich verbessert. Der Roboterschweißbrenner kann mit einem einfachen Wasserkühlkreislauf ausgerüstet sein oder mit einem doppelten Wasserkühlkreislauf, wie in G 93 10 729.3 beansprucht. Bei der Ausrüstung mit einem einfachen Wasserkühlkreislauf wird als ein weiteres wesentliches Merkmal der Erfindung im Bereich der Verbindung vom Außenrohr mit der Gasdüsenaufnahme ein Justageelement angeordnet. Das Justageelement besteht aus drei exzentrisch zueinander und übereinander angeordneten Stellringen, die durch entsprechend angeordnete Stellschlitze im Außenrohr verstellt werden können. Mit dem Justageelement ist es möglich, das Brennerrohr stets fein nachzuregulieren und damit in exakt mittiger Position zu halten. Die Kombination der erfindungsgemäßen Ablenkungs-, Stabilisierungs- und Verstellelemente hat zur Entwicklung eines Roboterschweißbrenners geführt, der auch über einen längeren Einsatzzeitraum hinweg präzise verlaufende und qualitativ hochwertige Schweißnähte garantiert.

### Ausführungsbeispiel

Die Erfindung wird anhand der Zeichnungen näher erläutert. Dabei zeigen
- Fig.1: Schnittdarstellung des Roboterschweißbrennerkopfes mit doppeltem Kühlwasserkreislauf
- Fig.2: Schnittdarstellung des Roboterschweißbrennerkopfes mit Justageelement
- Fig.3: Seitendarstellung eines gekröpften Roboterschweißbrenners mit Gasdüse
- Fig.4: Seitendarstellung eines Roboterschweißbrenners ohne Gasdüse
- Fig.5: Ansicht A in Fig.4.

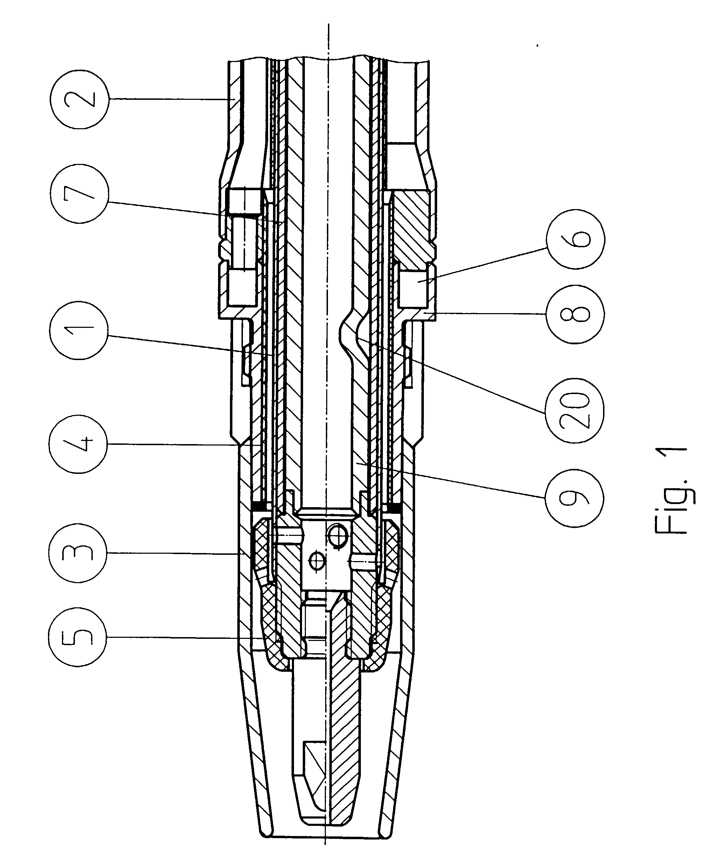

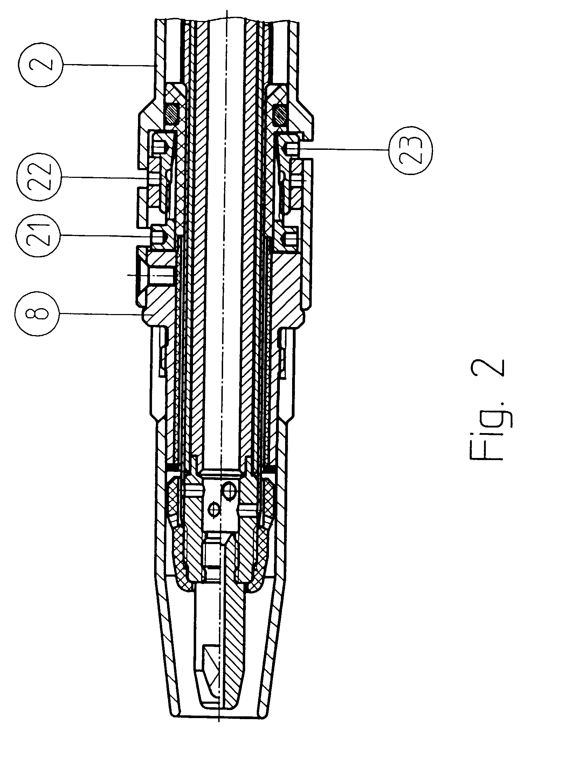

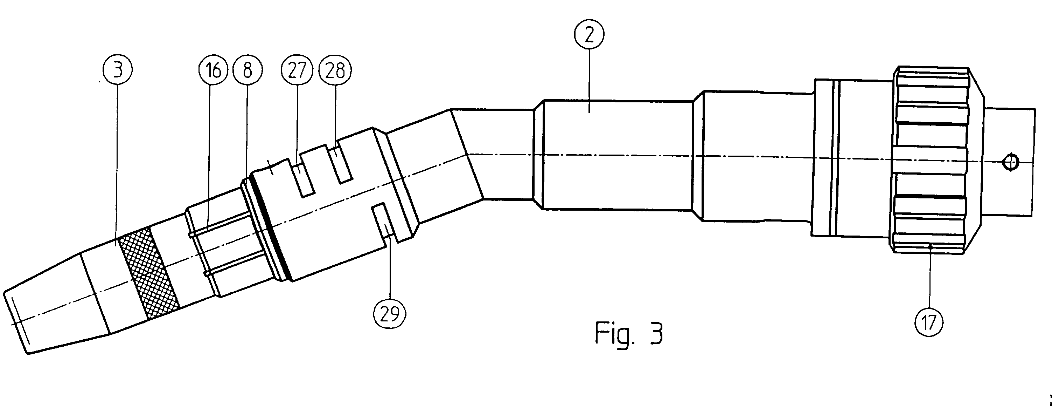

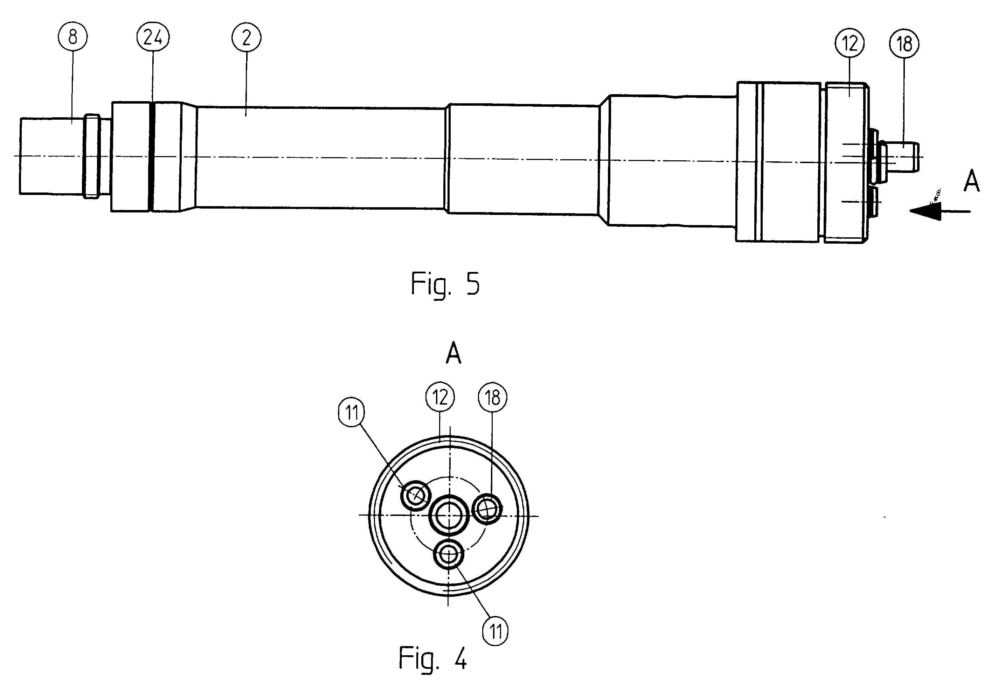

Über dem Brennerrohr 9 aus Kupfer, durch das der mit einer Drahtspirale umhüllte Schweißdraht transportiert wird, ist zentrisch das Deckrohr 7 und darüber, ebenfalls zentrisch, Innenrohr 1 angeordnet. Innenrohr 1 wird über die Gasdüsenaufnahme 8 hinausgeführt und trägt Gasverteiler 5. Deckrohr 7 ist mit dem Brennerohr 9 hermetisch verbunden, zwischen beiden ist der innere Wasserkühlkreislauf angeordnet, wie Fig.1 erkennen läßt. Mit einem Spalt ist über Innenrohr 1 eine Profilbuchse 4 zentrisch angeordnet, die mit der Gasdüsenaufnahme 8 endet. Profilbuchse 4 ist längsprofiliert und garantiert, daß zwischen Innenrohr 1 und der Gasdüsenaufnahme 8 ein Spalt besteht, der bis in den Gasverteiler 5 reicht und in Schweißpausen zur Reinigung des Schweißbrennerinneren mittels Druckluft benutzt wird, während des Schweißprozesses garantiert der Spalt, daß das Schutzgas druckverlustarm und laminar durch den Gasverteiler austritt. Beim Einsatz des erfindungsgemäßen Roboterschweißbrenners im AL-Schweißen wird mit Profilbuchse 4 Schutzgas zugeführt und über die Luftzuführung 18 die Druckluft zur Reinigung. Gasdüse 3, die im Anschlußbereich Dehnungsschlitze 16 aufweist, wie in Fig.3 zu sehen ist, wird mit dem Gasdüsenaufnahmekörper 8 über eine kombinierte Steck- und Schraubverbindung fest verbunden. Eine derartige Gasdüse wird in DE-G 93 11 142.8 beansprucht. Gasdüsenaufnahme 8 sitzt über Profilbuchse 4. Bis an die Gasdüsenaufnahme 8 wird der äußere Wasserkühlkreislauf geführt. Zusammen mit dem inneren Wasserkühlkreislauf wird der Roboterbrenner bis an den Düsenstock intensiv gekühlt, wie in DE-G 93 12 436.8 unter Schutz gestellt ist. Die schraub- und steckbare Gasdüse 3 stabilisiert die Verbindung zwischen Düsenstock und Brennerrohr 9, was insbesondere wichtig ist bei der Biege- und Torsionsbelastung, die mit einem Stromdüsenwechsel verbunden ist. Das ist auch eine vorteilhafte Wirkung der Erfindung. Ein weiteres erfindungswesentliches Merkmal sind die Einengungen 20 im Inneren von Brennerrohr 9. Einengungen 20 werden erhalten, indem Brennerrohr 9 mechanisch im Bereich der Gasdüsenaufnahme 8 mehrfach und versetzt, bevorzugt sechsmal, eingedrückt wird. Die Einengungen 20 drücken auf die Drahtspirale und bewirken, daß die antriebsbedingte unruhige Führung selbiger beruhigt wird und der Schweißdraht der vorgegebenen Naht präzise folgt. Die Anordnung des zusätzlichen Innenrohres 1 und Außenrohres 2 am Roboterschweißbrenner garantiert das stabile und korrekte Einspannen des Roboterschweißbrenners, womit eine weitere Ursache für Abweichungen im vorgegebenen Schweißnahtverlauf eliminiert wird. In Fig.2 ist die Anordnung des Justageelementes bei einem einfachen Wasserkühlkreislauf dargestellt. Im Anschluß an die Gasdüsenaufnahme 8 sind zwischen Profilbuchse 4 und Außenrohr 2 die Stellringe 21, 22 und 23 exzentrisch übereinander angeordnet. Im Bereich der Stellringe 21, 22 und 23 sind im Außenrohr 2 Stellschlitze 27, 28 und 29 entsprechend angeordnet, wie Fig.3 zeigt. Die einzelne Anordnung der Stellringe 21-23 zueinander ergibt sich dadurch, daß sich Stellring 22 am Außenrohr 2 abstützt, Stellring 21 über die Gasdüse 3 am Innenrohr 1 und Stellring 23 die Differenz zwischen den Stellringen 21 und 22 ausgleicht. Durch die exzentrische Anordnung der Stellringe 21-23 zueinander ist eine Verstellung um max.180^{o} möglich und die mittige Einstellung sowie gegebenenfalls eine spezielle Position des Brennerrohres 9 exakt gegeben. In Fig.3 ist dargestellt, daß der erfindungsgemäße Roboterschweißbrenner auch gekröpft ausgeführt sein kann und daß der Anschluß an den Schweißroboter mittels Überwurfmutter 17, die als nichtkoaxialer Zentralanschluß zum Schlauchpaket ausgebildet sein kann, realisiert wird. Fig.4 zeigt die gerade Variante eines Roboterschweißbrenners ohne aufgesteckte und geschraubte Gasdüse 3 und ohne Überwurfmutter 17. Sehr gut erkennbar ist bei dieser Darstellung die Verbindungsstelle 24 zwischen Außenrohr 2 und Gasdüsenaufnahme 8, die üblicherweise gelötet ist. Unter Überwurfmutter 17 ist am Ende von Brennerrohr 9 Flansch 12 angeordnet, der die hermetische Verbindung des wassergekühlten Roboterschweißbrenners mit der Maschine gewährleistet. Die Anordnung der Medienleitungen innerhalb des Roboterschweißbrenners zeigt Fig.5, wobei die Wasserkanäle 11 des doppelten Wasserkühlkreislaufes, die Schutzgasführung 18 und das mittig angeordnete Brennerrohr 9 erkennbar sind. Die Wasserzuführung wird im Brennerrohr 9 in zwei Wasserkanäle 11 aufgeteilt und garantiert die bereits beschriebene intensive Kühlung des erfindungsgemäßen Roboterschweißbrenners.

## Patentansprüche

1. Roboterschweißbrenner mit einfachem oder doppeltem Wasserkühlkreislauf, wobei das Brennerrohr (9) und das Deckrohr (7) hermetisch miteinander verbunden sind und den Wasservor- und -rücklauf begrenzen, einer Überwurfmutter (17) als Befestigungselement zum Schlauchpaket und mit einer steck- und schraubbaren Gasdüse (3) mit Dehnungsschlitzen (16) dadurch gekennzeichnet, daß
- zentrisch über dem Brennerrohr (9) und dem Deckrohr (7) ein Innenrohr (1) angeordnet ist,
- bis zur Gasdüsenaufnahme (8) zentrisch über das gesamte Brennerrohr (9), Deckrohr (7) und Innenrohr (1) ein Außenrohr (2) angeordnet ist, und
- Innenrohr (1) und Außenrohr (2) aus einem nichtferromagnetischen und steifen Material sind.

2. Roboterschweißbrenner nach Anspruch 1 dadurch gekennzeichnet, daß
- das Brennerrohr (9) nach innen mehrere Einengungen (20) im Bereich der Gasdüsenaufnahme (8) aufweist, wobei die Einengungen (20) in einer Linie nacheinander in Längsrichtung angeordnet sind.

3. Roboterschweißbrenner nach Anspruch 1 bis 2 dadurch gekennzeichnet, daß
- das Außenrohr (2) zur Brennerspitze mit einem Justageelement abschließt, wobei zwischen Außenrohr (2) und Gasdüsenaufnahme (8) Stellringe 21, 22 und 23 exzentrisch übereinander angeordnet sind, und
- im Außenrohr (2) entsprechend Stellschlitze 27, 28 und 29 angebracht sind, die die Stellringe 21, 22 und 23 zum justieren frei geben.

4. Roboterschweißbrenner nach Anspruch 1 bis 2 dadurch gekennzeichnet, daß
- Überwurfmutter (17) als Befestigungselement mit einem nichtkoaxialen Zentralanschluß ausgeführt ist.

## Claims

1. Robot welding torch with a single or double water cooling circuit, wherein the torch pipe (9) and the covering pipe (7) are connected together hermetically and bound the water supply and return, with a union nut (17) as fastening element to the hose assembly and with a plug-in threaded gas nozzle (3) with expansion slots (16), characterised in that
- an inner pipe (1) is disposed centrally over the torch pipe (9) and the covering pipe (7),
- an outer pipe (2) is disposed centrally over the entire torch pipe (9), covering pipe (7) and inner pipe (1) as far as the gas nozzle mounting (8), and
- the inner pipe (1) and outer pipe (2) are made of a non-ferromagnetic, rigid material.

2. Robot welding torch according to claim 1, characterised in that
- towards the inside the torch pipe (9) exhibits a plurality of narrowings (20) in the area of the gas nozzle mounting (8), the narrowings (20) being disposed in a line one after another in the longitudinal direction.

3. Robot welding torch according to claim 1 and 2, characterised in that
- towards the end of the torch the outer pipe (2) terminates in an adjusting element, with adjusting rings (21, 22 and 23) disposed eccentrically above one another between the outer pipe (2) and the gas nozzle mounting (8), and
- the outer pipe (2) is provided accordingly with adjusting slots (27, 28 and 29) which release the adjusting rings (21, 22 and 23) for adjustment.

4. Robot welding torch according to claims 1 and 2, characterised in that
- the union nut (17) takes the form of a fastening element with a non-coaxial central connection.

## Revendications

1. Chalumeau de soudage par robot, à circuit de refroidissement par de l'eau simple ou double, dans lequel le tube (9) du chalumeau et le tube (7) supérieur sont reliés hermétiquement l'un à l'autre et délimitent l'arrivée et le retour de l'eau, un écrou raccord (17) servant d'élément de fixation au paquet de tubes et une buse (3) à gaz pouvant être enfilée et vissée et ayant des fentes (16) de dilatation, caractérisé
- en ce qu'il est disposé au centre au-dessus du tube (9) de chalumeau et du tube (7) supérieur un tube (1) intérieur,
- il est disposé jusqu'au logement (8) de réception de la buse à gaz de manière centrée sur tout le tube (9) de chalumeau, le tube (7) supérieur et le tube (1) intérieur, un tube (2) extérieur, et
- le tube (1) intérieur et le tube (2) extérieur sont en un matériau non ferromagnétique et rigide.

2. Chalumeau de soudage par robot, à circuit de refroidissement par de l'eau simple ou double, suivant la revendication 1, caractérisé
- en ce que le tube (9) de chalumeau comporte vers l'intérieur plusieurs étranglements (20) dans la région du logement (8) de la buse à gaz, les étranglements (20) étant disposés en se succédant suivant une ligne dans la direction longitudinale.

3. Chalumeau de soudage par robot, à circuit de refroidissement par de l'eau simple ou double, suivant la revendication 1 ou 2, caractérisé
- en ce que le tube (2) extérieur se ferme vers la pointe du chalumeau par un élément d'ajustage, des anneaux de serrage 21, 22 et 23 étant disposés les uns au-dessus des autres de manière excentrée et
- dans le tube (2) extérieur, il est ménagé de manière correspondante des fentes 27, 28 et 29 qui pour l'ajustement libèrent les anneaux 21, 22 et 23 de serrage.

4. Chalumeau de soudage par robot, à circuit de refroidissement par de l'eau simple ou double, suivant la revendication 1 ou 2, caractérisé
- en ce que l'écrou raccord (17) est constitué sous la forme d'un élément de fixation ayant un raccord central qui n'est pas coaxial.
